# EUROPÄISCHE PATENTSCHRIFT

(11) **EP 0 436 193 B1**
(45) Veröffentlichungstag und Bekanntmachung des Hinweises auf die Patenterteilung: **19.10.1994**
(21) Anmeldenummer: 90124996.1
(22) Anmeldetag: 20.12.1990
(51) Int. Cl.: H01S 3/07, H01S 3/03

(54) **Gefalteter Wellenleiterlaser**
Folded-path waveguide laser
Laser à guide d'ondes plié

(30) Priorität: 30.12.1989 DE 3943373
(43) Veröffentlichungstag der Anmeldung: 10.07.1991
(73) Patentinhaber: DEUTSCHE FORSCHUNGSANSTALT FÜR LUFT- UND RAUMFAHRT e.V., 53111 Bonn (DE)
(72) Erfinder: Opower, Hans, Dr., W-8033 Krailling (DE)
(74) Vertreter: Hoeger, Stellrecht & Partner

(56) Entgegenhaltungen:
- EP-A- 0 305 893
- US-A- 3 772 611
- US-A- 3 982 204

## Beschreibung

Die Erfindung betrifft einen hochfrequenzangeregten, diffusionsgekühlten Wellenleiterlaser, umfassend einen gefalteten, instabilen Laserresonator mit einem ersten Resonatorachsenast und einem zweiten Resonatorachsenast, einen gefalteten optischen Wellenleiter mit einem ersten Wellenleiterast und einem zweiten Wellenleiterast, welche jeweils vom ersten bzw. zweiten Resonatorachsenast in ihrer Längsrichtung durchsetzt sind und welche jeweils zwei im Abstand voneinander angeordnete optische Wellenleiterflächen umfassen, und mindestens ein die Wellenleiteräste miteinander koppelndes Reflexionselement mit einer Reflexionsfläche.

Ein derartiger hochfrequenzangeregter diffusionsgekühlter Wellenleiterlaser ist beispielsweise aus der europäischen Patentanmeldung 0 305 893 bekannt.

Insoweit als das in dieser Druckschrift beschriebene Ausführungsbeispiel zwei Wellenleiteräste aufweist, sind diese durch mindestens zwei Reflexionselemente gekoppelt und erstrecken sich parallel zueinander.

Eine derartige Konfiguration hat den Nachteil, daß bei Verwendung zweier Reflexionselemente erhebliche Reflexionsverluste auftreten.

Der Erfindung liegt daher die Aufgabe zugrunde, einen Wellenleiterlaser der gattungsgemäßen Art derart zu verbessern, daß bei der Faltung möglichst geringe Reflexionsverluste auftreten und daß dieser Laser möglichst kompakt baut.

Diese Aufgabe wird bei einem Wellenleiterlaser der eingangs beschriebenen Art erfindungsgemäß dadurch gelöst, daß die beiden Wellenleiteräste an einem ersten Ende durch eine einzige Reflexionsfläche mit jeweils einfacher Strahlenreflexion an dieser miteinander gekoppelt sind, daß sich die beiden Resonatorachsenäste in ihrem Auftreffpunkt auf der ersten Reflexionsfläche schneiden und daß die beiden Wellenleiteräste in Richtung aufeinander zu gekrümmt sind.

Mit der erfindungsgemäßen Lösung wird nun zunächst erreicht, daß aufgrund des Vorhersehens einer einzigen Reflexionsfläche mit einfacher Strahlenreflexion die Verluste bei der Reflexion verringert werden und daß andererseits aber auch diese Ausführungsform kompakt baut, dadurch, daß nämlich die beiden Wellenleiteräste in Richtung aufeinander zu gekrümmt sind und somit sich nicht ausgehend von der Reflexionsfläche unter dem Reflexionswinkel voneinander weg erstrecken und dadurch einen erheblichen Raumbedarf benötigen.

Besonders vorteilhaft ist es im Rahmen der erfindungsgemäßen Lösung, wenn die beiden Resonatorachsenäste in ihrem Auftreffpunkt auf der Reflexionsfläche einen Winkel zwischen ungefähr 45° und ungefähr 90° miteinander einschließen. Dieser Winkel ist deshalb vorteilhaft, da bei größeren Winkeln die Führung der Strahlung durch die Wellenleiteräste im Bereich der Reflexionsfläche schlechter und somit auch die Reflexionsverluste größer werden, da erfindungsgemäß angestrebt werden sollte, daß die Strahlung jeweils durch die beiden Wellenleiteräste bis möglichst nahe der Reflexionsfläche beidseitig geführt ist. Vorzugsweise kann eine lediglich einseitige Führung der Strahlung durch die Wellenleiteräste im Bereich der Reflexionsfläche lediglich über eine Strecke in Kauf genommen werden, welche maximal dem 1,5-Fachen des Abstands der optischen Wellenleiterflächen betrifft, woraus ein zulässiger, von den Resonatorachsenästen eingeschlossener Winkel von ungefähr 45° bis 90° resultiert.

Hinsichtlich der Ausbildung der Wellenleiterflächen ist es vorteilhaft, wenn diese quer zu ihrer Längsrichtung eine Breite aufweisen, die ein Mehrfaches des Abstands derselben beträgt.

Besonders zweckmäßig ist es auch hinsichtlich der Ausbildung der Wellenleiterflächen, wenn diese von Wellenleiterwänden getragen werden, welche Hochfrequenzelektroden umfassen, wobei vorzugsweise vorgesehen ist, daß die Wellenleiterflächen Oberflächen der Hochfrequenzelektroden sind, welche im einfachsten Fall aus Metall sind.

Besonders vorteilhaft ist es im Rahmen der Erfindung, wenn die erste Reflexionsfläche relativ zu den Wellenleiterästen so angeordnet ist, daß eine vollständige Reflexion der von dem einen Wellenleiterast geführten Strahlung in den anderen Wellenleiterast erfolgt.

Besonders zweckmäßig ist im Rahmen der erfindungsgemäßen Lösung, wenn die beiden ersten Enden der Wellenleiteräste mit ihren einander abgewandten Wellenleiterflächen im wesentlichen bis zur Reflexionsfläche verlaufen und somit zumindest in diesem Bereich die von den Wellenleiterästen geführte Strahlung bis zu der Reflexionsfläche führen.

Ferner ist es im Rahmen der erfindungsgemäßen Lösung zweckmäßig, wenn die Wellenleiteräste im Bereich ihrer ersten Enden geradegerichtet verlaufen, um die Strahlung geradegerichtet zur Reflexionsfläche zu führen und von dieser wieder aufzunehmen.

Eine bevorzugte Ausführungsform der erfindungsgemäßen Lösung sieht vor, daß die Wellenleiteräste an ihren dem ersten Reflexionselement abgewandten zweiten Enden mit jeweils einem Resonatorspiegel versehen sind.

Vorzugsweise ist dabei vorgesehen, daß die an den zweiten Enden der Wellenleiteräste angeordneten Resonatorspiegel die Endspiegel des Resonators darstellen, so daß die Führung der Strahlung zwischen den Endspiegeln mittels der Wellenleiteräste und der dieser koppelnden Reflexionsfläche erfolgt.

Eine besonders bevorzugte geometrische Konstellation ist dann erreichbar, wenn sich die Reflexionsfläche in einer Ebene erstreckt, die parallel zu einer Krümmungsachse der Resonatorspiegel liegt.

Weiterhin sieht eine bevorzugte geometrische Konstellation vor, daß die beiden Wellenleiteräste im wesentlichen dieselbe Krümmung aufweisen und insbesondere im wesentlichen gleich lang sind.

Eine andere bevorzugte Ausführungsform des erfindungsgemäßen Wellenleiterlasers sieht vor, daß die Wellenleiteräste an einem dem ersten Ende gegenüberliegenden zweiten Ende miteinander gekoppelt sind, so daß nicht nur eine Kopplung am ersten Ende, sondern eine Kopplung der Wellenleiteräste auch am zweiten Ende miteinander erfolgt.

Die Kopplung kann über beliebige optische Kopplungselemente erfolgen. Zweckmäßig ist es jedoch im Rahmen einer vorteilhaften Weiterbildung, wenn die Kopplung am zweiten Ende auch durch ein zweites Reflexionselement erfolgt.

Vorzugsweise ist die geometrische Konfiguration dieses Ausführungsbeispiels so gewählt, daß in den an dem ersten und dem zweiten Ende gekoppelten Wellenleiterästen ein ringförmiger Strahlenverlauf ausbildet und somit zweckmäßigerweise einen Ringlaser geschaffen wird, der mit einer Minimalzahl optischer Reflexionselemente auskommt.

Eine besonders vorteilhafte Ausführungsform sieht vor, daß die beiden Wellenleiteräste am zweiten Ende durch eine einzige zweite Reflexionsfläche mit jeweils einfacher Strahlreflexion an dieser miteinander gekoppelt sind und daß sich insbesondere die beiden Resonatorachsenäste in ihrem jeweiligen Auftreffpunkt auf der zweiten Reflexionsfläche schneiden, so daß die gleichen Reflexionsverhältnisse am zweiten Enden wie an den ersten Enden vorliegen.

Insbesondere läßt sich die erfindungsgemäße Konfiguration, bei welcher die beiden Wellenleiteräste an beiden Enden miteinander gekoppelt sind, dann vorteilhaft zu einem Laser ausbilden, wenn die erste Reflexionsfläche die Spiegelfläche eines Resonatorspiegels ist, so daß die an sich zur Kopplung benötigte Spiegelfläche gleichzeitig auch die Spiegelfläche des Resonators darstellt und somit die Reflexionsverluste durch Spiegel minimiert werden.

Noch optimaler ist eine Ausführungsform, bei welcher auch die zweite Reflexionsfläche die Spiegelfläche eines Resonatorspiegels ist, so daß bei einem bevorzugten Ausführungsbeispiel die erste und die zweite Reflexionsfläche sowohl die beiden Wellenleiteräste miteinander koppeln als auch gleichzeitig Resonatorspiegel darstellen.

Prinzipiell könnten noch weitere Resonatorspiegel vorhanden sein. Daher ist es besonders zweckmäßig, wenn die erste und die zweite Reflexionsfläche die beiden Endspiegel des Resonators darstellen, so daß die weitere Strahlführung zwischen diesen lediglich noch durch die sich zwischen diesen Endspiegeln erstreckenden Wellenleiteräste erfolgt.

Im Rahmen der bislang beschriebenen erfindungsgemäßen Lösungen wurde nichts darüber ausgesagt, wie eine Auskopplung bei dem erfindungsgemäßen Wellenleiterlaser erfolgen soll. Besonders zweckmäßig ist es, wenn bei einem der beiden Spiegel eine Auskopplung erfolgt. Im Fall der an beiden Enden miteinander gekoppelten Wellenleiteräste ist bei Verwendung einer der Reflexionsflächen als Endspiegel und Auskopplung im Bereich eines dieser Endspiegel vorgesehen, daß dieser Endspiegel zwei den Winkel der Resonatorachsenäste im Auftreffpunkt zwischen die einschließende Laserstrahlen austreten läßt, wobei einer der Laserstrahlen aus dem einen Wellenleiterast und der andere aus dem jeweils anderen Wellenleiterast herrührt.

Um jedoch nicht zwei Laserstrahlen miteinander koppeln zu müssen ist zweckmäßigerweise vorgesehen, daß einer der austretenden Laserstrahlen durch einen Reflexionsspiegel zurückreflektierbar ist, wobei vorzugsweise der Reflexionsspiegel so ausgebildet ist, daß dieser eine zu den Wellenleiterflächen parallele Krümmungsachse aufweist.

Hinsichtlich der Ausbildung der instabilen Resonatoren wurden bei den bislang beschriebenen Ausführungsbeispielen keine Angaben gemacht. So ist vorzugsweise vorgesehen, daß der Resonator ein konfokaler Resonator ist, wobei insbesondere die Resonatorspiegel zylindrische Spiegelflächen aufweisen.

Darüberhinaus sieht eine vorteilhafte Konfiguration vor, daß der Resonator ein zu der Resonatorachse symmetrischer Zylinderresonator ist, der allerdings den Nachteil hat, daß beidseitig der Wellenleiter austretende Laserstrahlen entstehen.

Aus diesem Grund sieht eine noch verbesserte vorteilhafte Ausführungsform vor, daß der Resonator sich zu einer Seite der Resonatorachse als Hälfte eines zur Resonatorachse symmetrischen Zylinderresonators erstreckt.

Darüberhinaus wurden auch hinsichtlich der Anordnung des Strahlenverlaufs in den Wellenleiterästen keine näheren Angaben gemacht. So sieht ein bevorzugtes Ausführungsbeispiel vor, daß der Resonator einen Strahlenverlauf aufweist, welcher sich maximal über die Breite der Wellenleiteräste erstreckt, wobei eine optimale Ausnützung der Breite der Wellenleiteräste dann gegeben ist, wenn der Strahlenverlauf des Resonators sich im wesentlichen für die Breite der Wellenleiterflächen quer zu ihrer Längsrichtung erstreckt.

Darüberhinaus ist vorzugsweise vorgesehen, daß ein aus dem Resonator austretender Laserstrahl parallel zur Resonatorachse verläuft, daß sich in diesem Fall vorteilhafte geometrische Verhältnisse bei der Anpassung des Strahlenverlaufs an die Wellenleiter und umgekehrt ergeben.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

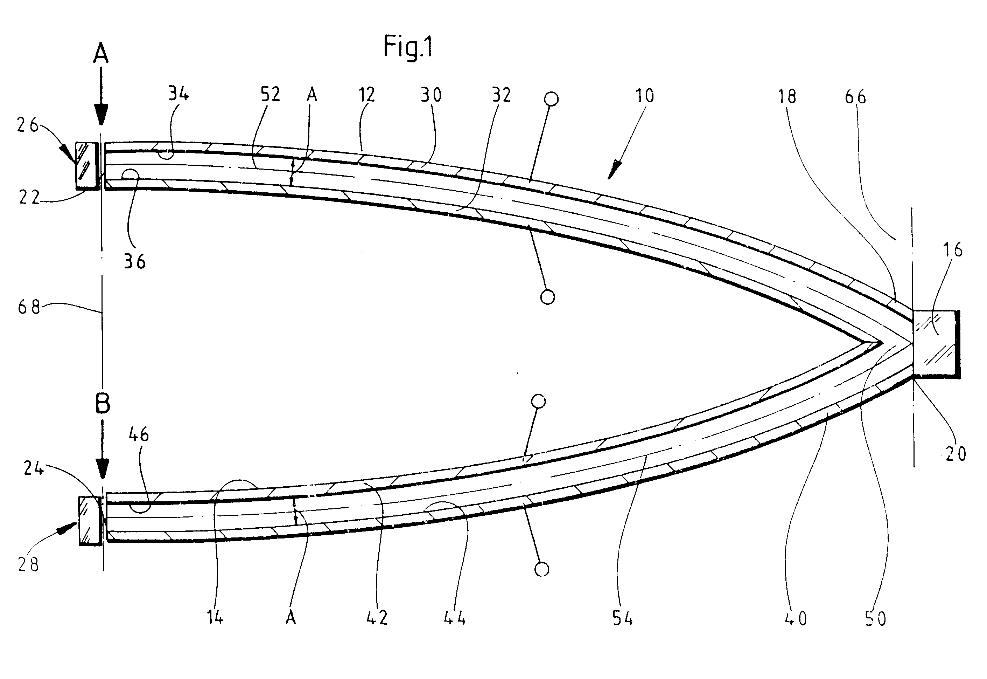

- Fig. 1: einen Längsschnitt durch ein erstes Ausführungsbeispiel eines erfindungsgemäßen Wellenleiterlasers;

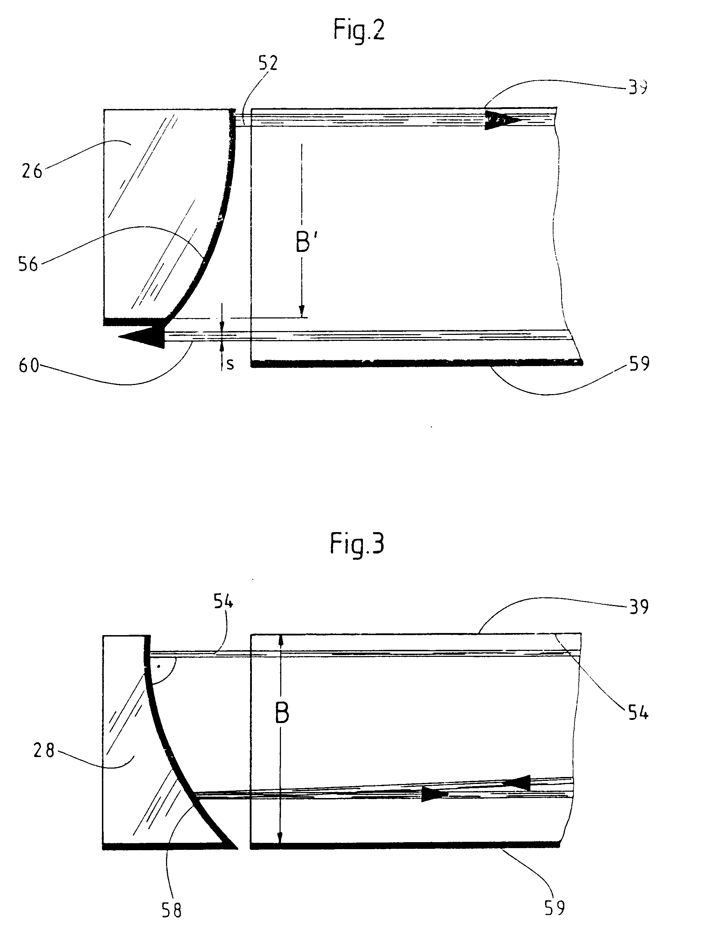

- Fig. 2: eine Draufsicht in Richtung des Pfeils A in Fig. 1;
- Fig. 3: eine Draufsicht in Richtung des Pfeils B in Fig. 1;
- Fig. 4: eine ausschnittsweise perspektivische Darstellung der geometrischen Verhältnisse im Reflexionsbereich zwischen beiden Wellenleiterästen;

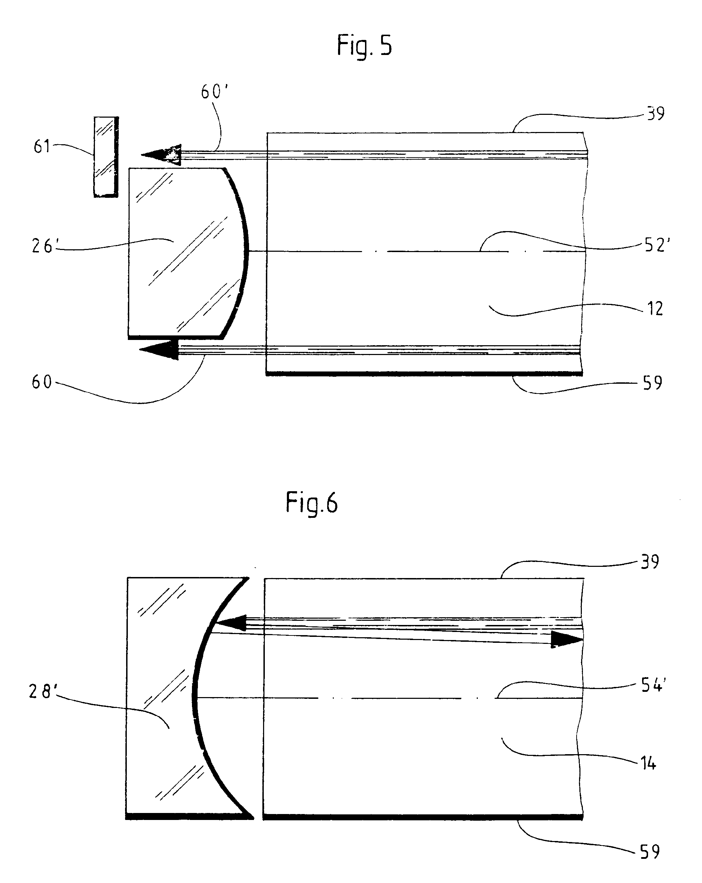

- Fig. 5: eine Darstellung ähnlich Fig. 2 einer Variante des ersten Ausführungsbeispiels;
- Fig. 6: eine Darstellung ähnlich Fig. 3 der Variante des ersten Ausführungsbeispiels gemäß Fig. 5;
- Fig. 7: einen Längsschnitt durch ein zweites Ausführungsbeispiel;
- Fig. 8: eine Draufsicht auf das zweite Ausführungsbeispiel in Richtung des Pfeils C;
- Fig. 9: eine Draufsicht auf das zweite Ausführungsbeispiel in Richtung des Pfeils D, und
- Fig. 10: eine Draufsicht auf das zweite Ausführungsbeispiel in Richtung des Pfeils E in Fig. 8.

Ein als Ganzes mit 10 bezeichnetes erstes Ausführungsbeispiel eines erfindungsgemäßen hochfrequenzangeregten diffusionsgekühlten Wellenleiters umfaßt einen als Ganzes mit 12 bezeichneten ersten Wellenleiterast und einen als Ganzes mit 14 bezeichneten zweiten Wellenleiterast, welche V-förmig relativ zueinander angeordnet sind und jeweils erste, einander benachbart liegende Enden 18 bzw. 20 aufweisen, mit welchen sie einem Reflexionsspiegel 16 zugewandt sind, der die beiden Wellenleiteräste 12 und 14 im Bereich der ersten Enden 18 bzw. 20 miteinander koppelt und somit beide Wellenleiteräste 12 und 14 zu einem gemeinsamen Wellenleiter vereinigt.

Den ersten Enden 18 bzw. 20 abgewandte zweite Enden 22 bzw. 24 des ersten bzw. zweiten Wellenleiterastes 12 bzw. 14 sind durch einen ersten bzw. zweiten Resonatorspiegel 26 bzw. 28 abgeschlossen, wobei die beiden Resonatorspiegel 26 bzw. 28 Endspiegel eines Resonators sind, dessen Strahlführung durch den ersten Wellenleiterast 12, den Reflexionsspiegel 16 und den zweiten Wellenleiterast 14 zwischen dem ersten Resonatorspiegel 26 und dem zweiten Resonatorspiegel 28 erfolgt.

Der erste Wellenleiterast 12, welcher einen optischen, für die Laserstrahlungswellenlänge des Resonators geeigneten Wellenleiter bildet, umfaßt dabei eine, bezogen auf die V-förmige Anordnung der Wellenleiteräste 12 und 14, äußere Wand 30 sowie eine innere Wand 32, welche jeweils eine äußere Wellenleiterfläche 34 sowie eine innere Wellenleiterfläche 36 bilden, die einander zugewandt sind und in gleichem Abstand A voneinander verlaufen.

Sowohl die äußere Wellenleiterfläche 34 als auch die innere Wellenleiterfläche 36 stehen dabei senkrecht auf einer Ebene 38, welche durch die beiden Wellenleiteräste 12 und 14, insbesondere denselben Seitenrand 39 derselben aufgespannt ist.

In gleicher Weise umfaßt der zweite Wellenleiterast eine äußere Wand 40 sowie eine innere Wand 42, welche ebenfalls eine äußere Wellenleiterfläche 44 sowie eine innere Wellenleiterfläche 46 aufweisen und in demselben Abstand A einander zugewandt parallel zueinander verlaufen. Auch diese Wellenleiterflächen 44 und 46 stehend senkrecht auf der Ebene 38.

Beide Wellenleiteräste 12 und 14 erstrecken sich nun ausgehend von ihren ersten Enden 18 bzw. 20 nicht in gerader Richtung von dem Reflexionsspiegel 16 weg, sondern sind in Richtung aufeinanderzu gekrümmt, so daß die zweiten Enden 22 bzw. 24 möglichst nahe beieinander liegen.

Dabei verlaufen die äußere Wellenleiterfläche 34 und die innere Wellenleiterfläche 36 des ersten Wellenleiterastes 12 nach wie vor im gleichen Abstand A voneinander und auch die äußere Wellenleiterfläche 44 und die innere Wellenleiterfläche 46 des zweiten Wellenleiterastes 14.

Der durch die beiden Resonatorspiegel 26 und 28 definierte Resonator, dessen Strahlführung durch den ersten Wellenleiterast 12, den Reflexionsspiegel 16 und den zweiten Wellenleiterast 14 erfolgt, hat dabei eine Resonatorachse, welche mit einem ersten Resonatorachsenast 52 von dem ersten Resonatorspiegel 26 zu einer Reflexionsfläche 50 des Reflexionsspiegels 16 verläuft und von dieser Reflexionsfläche 50 mit einem zweiten Resonatorachsenast 54 zu dem zweiten Resonatorspiegel 28.

Aufgrund der Krümmung der Wellenleiterflächen 34, 36, 44, 46 verlaufen auch die Resonatorachsenäste 52 und 54 in gleicher Weise wie die Wellenleiterflächen 34 und 36 bzw. 44 und 46 gekrümmt.

Bei den Resonatorspiegeln 26 und 28 handelt es sich um die beiden Spiegel eines konfokalen, instabilen Resonators, welcher die auf einer Seite der Resonatorachse liegende Hälfte eines symmetrischen, instabilen Resonators darstellt, wobei der erste Resonatorspiegel 26 eine konvex gekrümmte, dem ersten Wellenleiterast 12 zugewandte Spiegelfläche 56 und der zweite Resonatorspiegel 28 eine konkav gekrümmte, dem zweiten Wellenleiterast 14 zugewandte Spiegelfläche 58 aufweist und beide Spiegelflächen jeweils 56, 58 im Auftreffpunkt des jeweiligen Resonatorachsenastes 52 bzw. senkrecht zu diesem verlaufenden. Da es sich bei dem Resonator um die Hälfte eines instabilen, symmetrischen konfokalen Resonators handeln soll, liegen die Resonatoräste 52 bzw. 54 jeweils auf derselben Seite der Resonatorspiegel 26 und 28 und verlaufen vorzugsweise im Bereich eines der Seitenränder 39, 59 der Wellenleiteräste 12 bzw. 14, vorzugsweise längs des Seitenrandes 39 der Wellenleiteräste 12 und 14.

Ausgehend von den Resonatorachsenästen 52 und 54 erstrecken sich dann die Spiegelflächen 56 bzw. 58 in Richtung des gegenüberliegenden Seitenrandes 59, wobei der zweite Resonatorspiegel 28 sich im wesentlichen über eine gesamte Breite B des zweiten Wellenleiterastes 14 erstreckt, während sich der erste Resonatorspiegel lediglich über eine Teilbreite B′ des ersten Wellenleiterastes 12 erstreckt und somit einen Ausschnitt S bis zum dem Seitenrand 39 gegenüberliegenden Seitenrand 59 freiläßt, durch welchen ein austretender Laserstrahl 60 den ersten Wellenleiterast 12 verläßt.

Vom Prinzip her bilden dabei die beiden Resonatorspiegel 26 und 28 gemeinsam mit den beiden dazwischenliegenden Wellenleiterästen 12 und 14 einen Laser mit einem Strahlengang, welcher beispielsweise Gegenstand der europäischen Offenlegungsschrift 0 305 893 ist, auf welche hinsichtlich der grundsätzlichen Ausbildung des Strahlenverlaufs zwischen dem Resonatorspiegel 26 und 28 vollinhaltlich Bezug genommen wird.

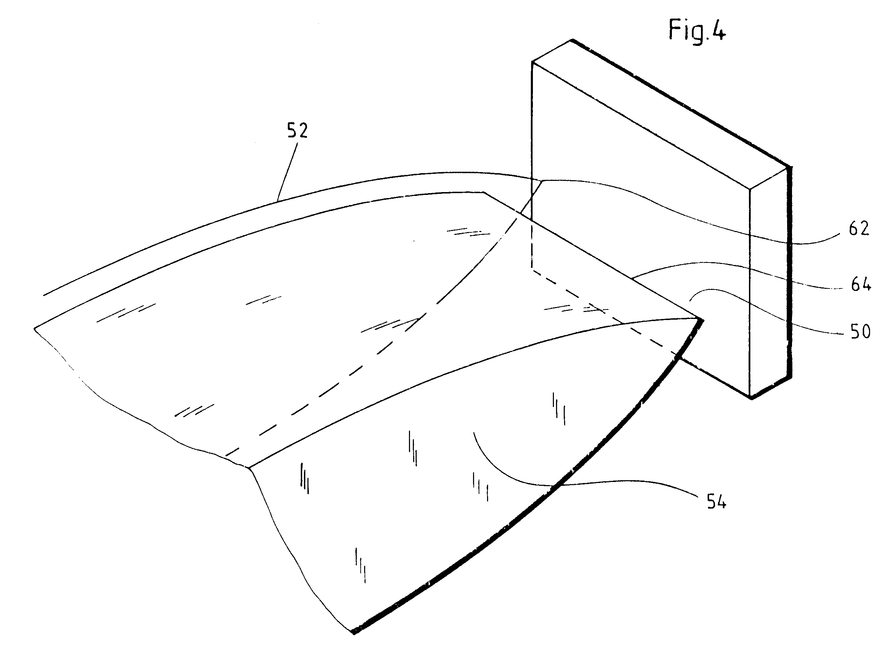

Der Reflexionsspiegel 16 ist nun im Bereich der ersten Enden 18 und 20 so angeordnet, daß der den ersten Wellenleiterast 12 durchsetzende erste Resonatorachsenast 52 in einem Punkt 62 auf die Reflexionsfläche 50 trifft, und daß der den zweiten Wellenleiterast durchsetzende zweite Resonatorachsenast 54 ebenfalls in dem Punkt 62 auf die Reflexionsfläche 50 trifft, so daß sich beide Resonatorachsenäste 52 und 54 in diesem Punkt 62 auf der Reflexionsfläche 50 treffen. Da die Resonatorachsenäste 52 und 54, wie bereits beschrieben, längs des Seitenrandes 39 der Wellenleiteräste 12 und 14 verlaufen, liegt der Punkt 62 ebenfalls in der durch die Seitenränder 39 aufgespannten Ebene 38 (Fig. 4).

Ferner ist die Reflexionsfläche 50 so angeordnet, daß deren Flächennormale 65 die Winkelhalbierende der Resonatorachsenäste 52 und 54 im Bereich des Auftreffpunktes 62 darstellt.

Außerdem ist der Reflexionsspiegel 16 so angeordnet, daß er alle nahe der äußeren Wellenleiterfläche 34 des ersten Wellenleiterastes 12 auf die Reflexionsfläche 50 auftreffenden Strahlen so reflektiert, daß diese im zweiten Wellenleiterast 14 nahe der inneren Wellenleiterfläche 46 weiterverlaufen und alle nahe der äußeren Wellenleiterfläche 44 des zweiten Wellenleiterastes 14 auf die Reflexionsfläche 50 auftreffenden Strahlen nach der Reflexion längs der inneren Wellenleiterfläche 36 des ersten Wellenleiterastes 12 weiterverlaufen.

Vorzugsweise sind die beiden inneren Wände 32 und 42 des ersten bzw. zweiten Wellenleiterastes 12 bzw. 14 so aneinandergefügt, daß die inneren Wellenleiterflächen 36 und 46 sich längs einer Kante 64 treffen, die in konstantem Abstand zur Reflexionsfläche 50 verläuft.

Insbesondere ist bei dem ersten Ausführungsbeispiel die Reflexionsfläche 50 so angeordnet, daß sie in einer Ebene 66 liegt, die ebenfalls senkrecht auf der Ebene 38 steht.

Darüberhinaus sind die Spiegelflächen 56 und 58 noch vorzugsweise als zylindrische Spiegelflächen ausgebildet, welche senkrecht zu den Wellenleiterflächen 34 und 36 bzw. 44 und 46 an den zweiten Enden 22 bzw. 24 verlaufen. Besonders zweckmäßig ist eine Anordnung, bei welcher die Spiegelflächen 56 und 58 jeweils eine Krümmungsachse aufweisen, die parallel zur jeweils anderen Krümmungsachse und insbesondere parallel zur Ebene 66 verläuft.

Darüberhinaus ist der Strahlenverlauf des durch die Resonatorspiegel 26 und 28 aufgespannten Resonators so festgelegt, daß dieser sich über die gesamte Breite B der jeweiligen Wellenleiteräste 12 und 14, die dieselbe Breite B aufweisen, erstreckt, oder zumindest innerhalb der Seitenränder 39 und 59 derselben liegt.

Bei einer Variante des ersten Ausführungsbeispiels 10 ist die Konfiguration der Wellenleiteräste 12 und 14 sowie des Reflexionsspiegels 16 relativ zueinander dieselbe wie beim ersten Ausführungsbeispiel, so daß hinsichtlich deren Beschreibung auf die Ausführungen zum ersten Ausführungsbeispiel verwiesen werden kann und auch dieselben Bezugszeichen verwendet werden.

Im Gegensatz dazu ist der Resonator jedoch ein symmetrischer konfokaler Resonator, so daß die Resonatorachsenäste 52′ und 54′ nun ungefähr mittig zwischen den Seitenrändern 39 und 59 der Wellenleiteräste 12 bzw. 14 verlaufen und ungefähr mittig auf die Resonatorspiegel 26′ und 28′ auftreffen, wobei diese nunmehr sich mit ihrer konvexen bzw. konkaven Krümmung beiderseits der Resonatorachse erstrecken.

Bei einem derartigen symmetrischen konfokalen Resonator tritt nunmehr neben dem Laserstrahl 60 nahe des Seitenrands 59 auf der gegenüberliegenden Seite ein Laserstrahl 60′ nahe des Seitenrands 39 des ersten Wellenleiterastes 12 aus diesem aus, so daß zwei Laserstrahlen 60 und 60′ zur Verfügung stehen.

Bei einer bevorzugten Variante ist vorgesehen, daß der Laserstrahl 60′ auf einen Rückreflexionsspiegel 61 trifft und von diesem in den jeweiligen Wellenleiterast zurückreflektiert wird.

Bei dem ersten Ausführungsbeispiel sowie bei der Variante ist das Lasergas zwischen den Wellenleiterflächen 34 und 36 bzw. 44 und 46 strömungslos angeordnet und wird nur durch die Diffusion und die Wechselwirkung mit den Wellenleiterflächen 34 und 36 bzw. 44 und 46 gekühlt.

Vorzugsweise sind die Wände 30, 32 und 42, 44 aus die Laserstrahlung reflektierendem Metall und dienen dabei gleichzeitig als Elektroden zur Hochfrequenzanregung des zwischen diesen eingeschlossenen Lasergases, wobei beispielsweise die inneren Wände 32 und 42 gemeinsam mit einem ersten Anschluß und die äußeren Wände 30 und 40 gemeinsam mit einem zweiten Anschluß einer Hochfrequenzwelle verbunden sind.

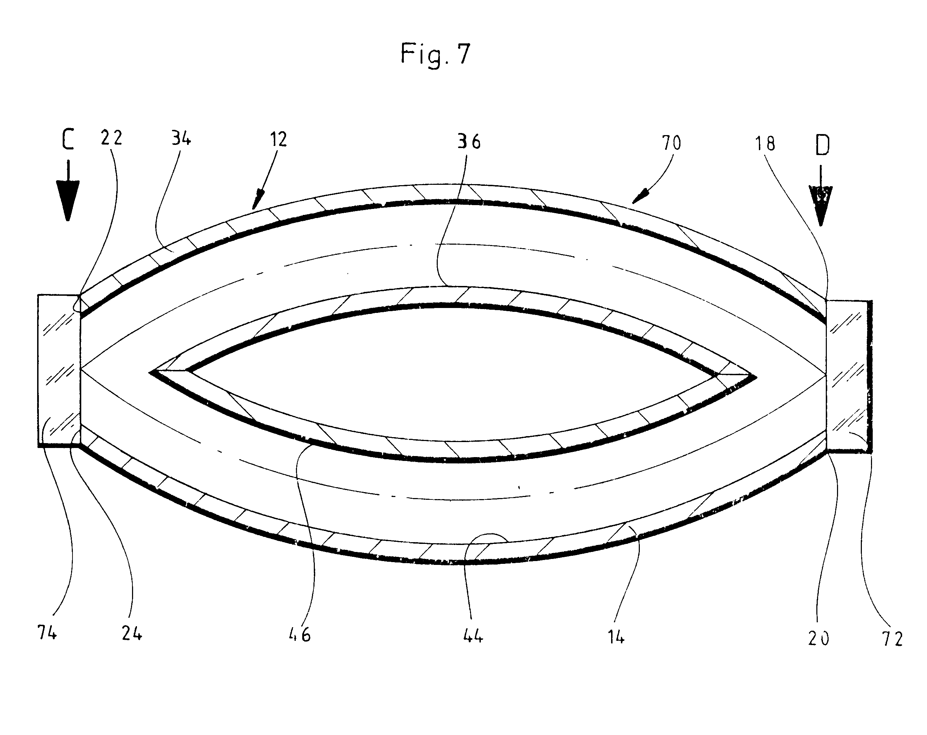

Bei einem zweiten Ausführungsbeispiel, dargestellt in den Fig. 7 bis 10 sind insoweit, als dieselben Teile wie beim ersten Ausführungsbeispiel Verwendung finden, diese mit denselben Bezugszeichen versehen, so daß hinsichtlich deren Beschreibung auf die Ausführungen zum ersten Ausführungsbeispiel verwiesen werden kann.

Auch beim zweiten Ausführungsbeispiel ist ein erster Wellenleiterast 12 und ein zweiter Wellenleiterast 14 vorgesehen, welche ebenfalls im konstanten Abstand A voneinander angeordnete Wellenleiterflächen 34 und 36 bzw. 44 und 46 aufweisen und prinzipiell in gleicher Weise wie die Wellenleiteräste 12 und 14 des ersten Ausführungsbeispiels konzipiert sind.

In gleicher Weise wie beim ersten Ausführungsbeispiel sind auch die Wellenleiteräste 12 und 14 im Bereich ihrer ersten Enden 18 bzw. 20 durch ein Reflexionselement 72 gekoppelt.

Im Gegensatz zum ersten Ausführungsbeispiel sind die bei dem zweiten Ausführungsbeispiel 70 die Wellenleiteräste 12 und 14 im Bereich ihrer zweiten Enden 22 bzw. 24 durch ein Reflexionselement 74 miteinander gekoppelt.

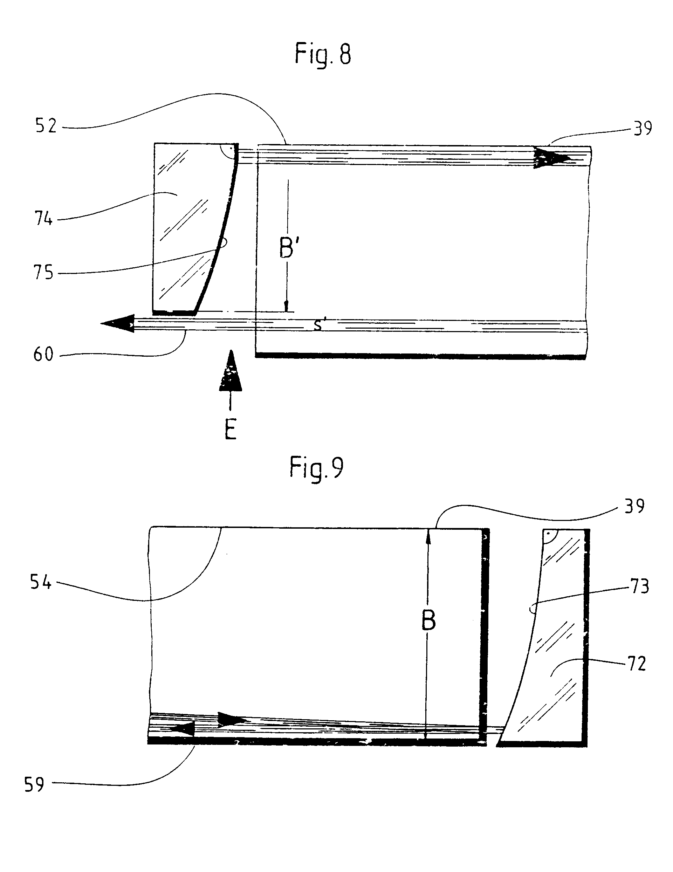

Diese beiden Reflexionselemente 74 und 76 sind, wie in den Fig. 8 und 9 dargestellt, als die beiden Resonatorspiegel eines instabilen optischen, vorzugsweise eines instabilen konfokalen Resonators ausgebildet, wobei der Resonator jeweils die auf einer Seite der Resonatorachse liegende Hälfte eines instabilen konfokalen Resonators darstellt, so daß die Resonatorachsenäste 52 und 54 längs des Seitenrandes 39 der Wellenleiteräste 12 und 14 verlaufen und das Reflexionselement 74 als konvexer Spiegel mit entsprechend gekrümmter Spiegelfläche 75, ähnlich der des Resonatorspiegels 26 des ersten Ausführungsbeispiels ausgebildet ist, während das Reflexionselement 72 als der konkave Spiegel des instabilen Resonators mit entsprechend gekrümmter Spiegelfläche 73, ähnlich der des Resonatorspiegels 28 des ersten Ausführungsbeispiels, ausgebildet ist, so daß sich das Reflexionselement 72 über die gesamte Breite B des Wellenleiteräste 12 und 14 zwischen den Seitenrändern 39 und 59 erstreckt, während sich das Reflexionselement 74 lediglich über eine Teilbreite B′ erstreckt und benachbart dem Seitenrand 59 einen Ausschnitt S′ freiläßt, so daß an dem Reflexionselement 74 vorbei Strahlung austreten kann.

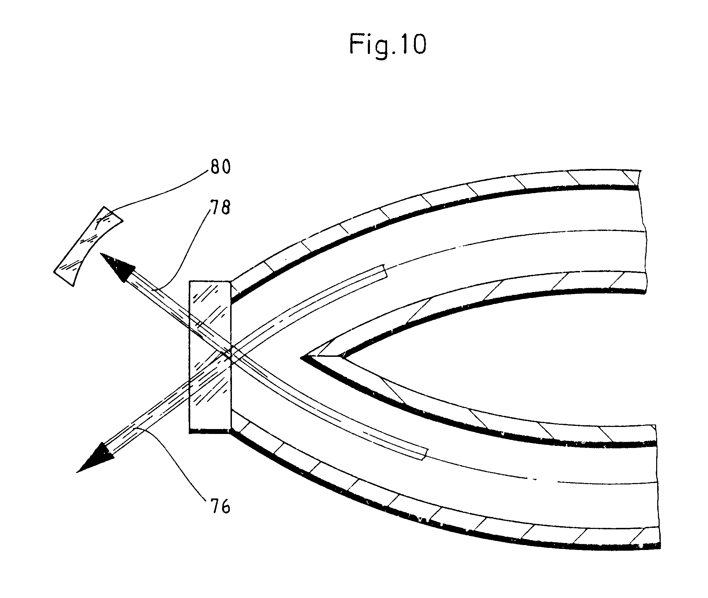

Wie in Fig. 10 dargestellt, sind es nunmehr zwei Strahlenbündel, nämlich ein aus dem ersten Wellenleiterast 12 austretender erster Strahl 76 und ein aus dem zweiten Wellenleiterast 14 austretender zweiter Strahl 78, die den Resonator verlassen und sich jeweils in Fortsetzung des jeweiligen Wellenleiterastes 12 bzw. 14 ausbreiten.

Um bei dem zweiten Ausführungsbeispiel 70 lediglich einen austretenden Laserstrahl, beispielsweise den ersten Laserstrahl zu nutzen, ist vorzugsweise ein Rückreflexionsspiegel 80 vorgesehen, welcher den zweiten Strahl 78 wieder in den zweiten Wellenleiterast 14 zurück reflektiert, so daß dieser wiederum in den instabilen Resonator, gebildet aus den Resonatorspiegeln 72 und 74, eintritt und solange hin- und herreflektiert wird, bis dieser in Form des ersten Strahls 76 austreten kann.

Der Rückreflexionsspiegel 80 ist dabei vorzugsweise konkav gekrümmt, insbesondere zylindrisch mit einer Krümmungsachse, die senkrecht auf der durch die Wellenleiteräste 12 und 14 aufgespannten Ebene 38 steht.

Durch das zweite Ausführungsbeispiel 70 wird somit ein Ringlasersystem, basierend auf einem optisch instabilen Resonator, geschaffen, bei welchem lediglich die beiden Reflexionselemente 72 und 74 erforderlich sind, die außerdem noch gleichzeitig die Spiegel des instabilen, vorzugsweise konfokalen optischen Resonators darstellen, so daß ein Minimum an Spiegelverlusten entsteht.

Für die Anordnung der Reflexionselemente 72 und 74 gilt das im Zusammenhang mit dem ersten Ausführungsbeispiel gesagte, insbesondere sind diese, genau wie beim ersten Ausführungsbeispiel, so anzuordnen, daß jeweils eine vollständige Reflexion der von dem einen Wellenleiterast 12, 14 ankommenden Strahlung in den jeweils anderen Wellenleiterast 14, 12 erfolgt und somit die gesamte, vom einen Wellenleiterast 12, 14 geführt Strahlung in den jeweils anderen Wellenleiterast 14, 12 eingekoppelt wird.

Ferner wird auch hinsichtlich der Ausbildung der Wellenleiteräste 12 und 14 der Modifikation des instabilen Resonators, der Anordnung und Kühlung des Lasergases, sowie der Anregung des Lasergases auf die Ausführungen zum ersten Ausführungsbeispiel Bezug genommen.

## Patentansprüche

1. Hochfrequenzangeregter, diffusionsgekühlter Wellenleiterlaser, umfassend einen gefalteten, instabilen Laserresonator mit einem ersten Resonatorachsenast und einem zweiten Resonatorachsenast, einen gefalteten optischen Wellenleiter mit einem ersten Wellenleiterast und einem zweiten Wellenleiterast, welche jeweils vom ersten beziehungsweise zweiten Resonatorachsenast in ihrer Längsrichtung durchsetzt sind und welche jeweils zwei im Abstand voneinander angeordnete optische Wellenleiterflächen umfassen, und mindestens ein die Wellenleiteräste miteinander koppelndes Reflexionselement mit einer Reflexionsfläche,
**dadurch gekennzeichnet**,
daß die beiden Wellenleiteräste (12, 14) an einem ersten Ende (18, 20) durch eine einzige Reflexionsfläche (50, 73) mit jeweils einfacher Strahlreflexion an dieser miteinander gekoppelt sind, daß sich die beiden Resonatorachsenäste (52, 54) in ihrem Auftreffpunkt (62) auf der ersten Reflexionsfläche (50, 73) schneiden und daß die beiden Wellenleiteräste (12, 14) in Richtung aufeinanderzu gekrümmt sind.

2. Wellenleiterlaser nach Anspruch 1, dadurch gekennzeichnet, daß die beiden Resonatorachsenäste (52, 54) in ihrem Auftreffpunkt (62) auf der Reflexionsfläche (50, 73) einen Winkel zwischen ungefähr 45° und ungefähr 90° miteinander einschließen.

3. Wellenleiterlaser nach Anspruch 1 oder 2, dadurch gekennzeichnet, daß die erste Reflexionsfläche (50, 73) relativ zu den Wellenleiterästen (12, 14) so angeordnet ist, daß eine vollständige Reflexion der von einem Wellenleiterast (12, 14) geführten Strahlung in den anderen Wellenleiterast (14, 12) erfolgt.

4. Wellenleiterlaser nach einem der voranstehenden Ansprüche, dadurch gekennzeichnet, daß die beiden ersten Enden (18, 20) der Wellenleiteräste (12, 14) mit ihren einander abgewandten Wellenleiterflächen (34, 44) im wesentlichen bis zur Reflexionsfläche (50, 73) verlaufen.

5. Wellenleiterlaser nach einem der voranstehenden Ansprüche, dadurch gekennzeichnet, daß die Wellenleiteräste (12, 14) im Bereich ihrer ersten Enden (18, 20) geradegerichtet verlaufen.

6. Wellenleiterlaser nach einem der voranstehenden Ansprüche, dadurch gekennzeichnet, daß die Wellenleiteräste (12, 14) an ihren dem ersten Reflexionselement (16, 72) abgewandten zweiten Enden (22, 24) mit jeweils einem Resonatorspiegel (26, 28) versehen sind.

7. Wellenleiterlaser nach Anspruch 6, dadurch gekennzeichnet, daß die an den zweiten Enden (22, 24) der Wellenleiteräste (12, 14) angeordneten Resonatorspiegel (26, 28) die Endspiegel des Resonators darstellen.

8. Wellenleiterlaser nach einem der voranstehenden Ansprüche, dadurch gekennzeichnet, daß sich die Reflexionsflächen (50, 73) in einer Ebene (66) erstrecken, die parallel zu einer Krümmungsachse der Resonatorspiegel (26, 28) liegt.

9. Wellenleiterlaser nach einem der voranstehenden Ansprüche, dadurch gekennzeichnet, daß die Wellenleiteräste (12, 14) an einem dem ersten Ende (18, 20) gegenüberliegenden zweiten Ende (22, 24) miteinander gekoppelt sind.

10. Wellenleiterlaser nach Anspruch 9, dadurch gekennzeichnet, daß die Kopplung am zweiten Ende (22, 24) durch ein zweites Reflexionselement (74) erfolgt.

11. Wellenleiterlaser nach Anspruch 9 oder 10, dadurch gekennzeichnet, daß sich in dem an dem ersten und dem zweiten Ende (18, 20, 22, 24) gekoppelten Wellenleiterästen (12, 14) ein ringförmiger Strahlenverlauf ausbildet.

12. Wellenleiterlaser nach Anspruch 10 oder 11, dadurch gekennzeichnet, daß die beiden Wellenleiteräste (12, 14) am zweiten Ende (22, 24) durch eine einzige zweite Reflexionsfläche (75) mit jeweils einfacher Strahlreflexion an dieser miteinander gekoppelt sind.

13. Wellenleiterlaser nach Anspruch 12, dadurch gekennzeichnet, daß sich die beiden Resonatorachsenäste (52, 54) in ihrem jeweiligen Auftreffpunkt auf der zweiten Reflexionsfläche (75) schneiden.

14. Wellenleiterlaser nach einem der voranstehenden Ansprüche, dadurch gekennzeichnet, daß die erste Reflexionsfläche (73) die Spiegelfläche eines Resonatorspiegels (72) ist.

15. Wellenleiterlaser nach einem der Ansprüche 9 oder 14, dadurch gekennzeichnet, daß die zweite Reflexionsfläche (75) die Spiegelfläche eines Resonatorspiegels (74) ist.

16. Wellenleiterlaser nach Anspruch 14 oder 15, dadurch gekennzeichnet, daß die erste und die zweite Reflexionsfläche (73, 75) durch die beiden Endspiegel (72, 74) des Resonators gebildet sind.

17. Wellenleiterlaser nach Anspruch 16, dadurch gekennzeichnet, daß bei einem der beiden Endspiegel (74) eine Auskopplung erfolgt.

18. Wellenleiterlaser nach Anspruch 17, dadurch gekennzeichnet, daß der Endspiegel (74) zwei den Winkel der Resonatorachsenäste (52, 54) im Auftreffpunkt zwischen sich einschließende Laserstrahlen (76, 78) austreten läßt.

19. Wellenleiterlaser nach Anspruch 18, dadurch gekennzeichnet, daß einer der austretenden Laserstrahlen (78) durch einen Reflexionsspiegel (80) zurückreflektierbar ist.

20. Wellenleiterlaser nach einem der voranstehenden Ansprüche, dadurch gekennzeichnet, daß der Resonator ein konfokaler Resonator ist.

21. Wellenleiterlaser nach einem der voranstehenden Ansprüche, dadurch gekennzeichnet, daß die Resonatorspiegel (26, 28, 72, 74) zylindrische Spiegelflächen (56, 58, 73, 75) aufweisen.

22. Wellenleiterlaser nach einem der voranstehenden Ansprüche, dadurch gekennzeichnet, daß der Resonator sich zu einer Seite der Resonatorachse (52, 54) als Hälfte einem zur Resonatorachse (52, 54) symmetrischen instabilen Resonators erstreckt.

## Claims

1. High-frequency excited, diffusion-cooled waveguide laser comprising a folded, unstable laser resonator with a first resonator axis branch and a second resonator axis branch, a folded optical waveguide with a first waveguide branch and a second waveguide branch penetrated in their longitudinal direction by the first and the second resonator axis branch, respectively, and each comprising two optical waveguide surfaces arranged in spaced relation to one another, and at least one reflection element with a reflection surface coupling the waveguide branches with one another, characterized in that the two waveguide branches (12, 14) are coupled with one another at a first end (18, 20) by a single reflection surface (50, 73) with a single respective beam reflection at said surface, that the two resonator axis branches (52, 54) intersect at their point of impact (62) on the first reflection surface (50, 73) and that the two waveguide branches (12, 14) are curved in the direction towards one another.

2. Waveguide laser as defined in claim 1, characterized in that the two resonator axis branches (52, 54) form an angle with one another of between approximately 45° and approximately 90° at their point of impact (62) on the reflection surface (50, 73).

3. Waveguide laser as defined in claim 1 or 2, characterized in that the first reflection surface (50, 73) is arranged relative to the waveguide branches (12, 14) such that the radiation guided by one waveguide branch (12, 14) is completely reflected into the other waveguide branch (14, 12).

4. Waveguide laser as defined in any of the preceding claims, characterized in that the two first ends (18, 20) of the waveguide branches (12, 14) extend with their waveguide surfaces (34, 44) facing away from one another essentially as far as the reflection surface (50, 73).

5. Waveguide laser as defined in any of the preceding claims, characterized in that the waveguide branches (12, 14) extend in a straight orientation in the region of their first ends (18, 20).

6. Waveguide laser as defined in any of the preceding claims, characterized in that the waveguide branches (12, 14) are each provided with a resonator mirror (26, 28) at their second ends (22, 24) facing away from the first reflection element (16, 72).

7. Waveguide laser as defined in claim 6, characterized in that the resonator mirrors (26, 28) arranged at the second ends (22, 24) of the waveguide branches (12, 14) constitute the end mirrors of the resonator.

8. Waveguide laser as defined in any of the preceding claims, characterized in that the reflection surfaces (50, 73) extend in a plane (66) lying parallel to an axis of curvature of the resonator mirrors (26, 28).

9. Waveguide laser as defined in any of the preceding claims, characterized in that the waveguide branches (12, 14) are coupled with one another at a second end (22, 24) opposite the first end (18, 20).

10. Waveguide laser as defined in claim 9, characterized in that the coupling at the second end (22, 24) takes place by means of a second reflection element (74).

11. Waveguide laser as defined in claim 9 or 10, characterized in that an annular beam path is formed in the waveguide branches (12, 14) coupled at the first and second ends (18, 20, 22, 24).

12. Waveguide laser as defined in claim 10 or 11, characterized in that the two waveguide branches (12, 14) are coupled with one another at the second end (22, 24) by a single second reflection surface (75) with a single respective beam reflection.

13. Waveguide laser as defined in claim 12, characterized in that the two resonator axis branches (52, 54) intersect at their respective point of impact on the second reflection surface (75).

14. Waveguide laser as defined in any of the preceding claims, characterized in that the first reflection surface (73) is the mirror surface of a resonator mirror (72).

15. Waveguide laser as defined in any of claims 9 to 14, characterized in that the second reflection surface (75) is the mirror surface of a resonator mirror (74).

16. Waveguide laser as defined in claim 14 or 15, characterized in that the first and second reflection surfaces (73, 75) are formed by the two end mirrors (72, 74) of the resonator.

17. Waveguide laser as defined in claim 16, characterized in that a coupling-out takes place at one of the two end mirrors (74).

18. Waveguide laser as defined in claim 17, characterized in that the end mirror (74) allows two laser beams (76, 78) forming between them the angle of the resonator axis branches (52, 54) at the point of impact to exit.

19. Waveguide laser as defined in claim 18, characterized in that one of the exiting laser beams (78) is reflected back by a reflection mirror (80).

20. Waveguide laser as defined in any of the preceding claims, characterized in that the resonator is a confocal resonator.

21. Waveguide laser as defined in any of the preceding claims, characterized in that the resonator mirrors (26, 28, 72, 74) have cylindrical mirror surfaces (56, 58, 73, 75).

22. Waveguide laser as defined in any of the preceding claims, characterized in that the resonator extends on one side of the resonator axis (52, 54) as half of an unstable resonator symmetrical to the resonator axis (52, 54).

## Revendications

1. Laser à guide d'ondes, refroidi par diffusion, à excitation haute fréquence, incorporant un résonateur laser plié instable avec une première branche axiale de résonateur et une deuxième branche axiale de résonateur, un guide d'ondes optique plié avec une première branche de guide d'ondes et une deuxième branche de guide d'ondes, qui sont respectivement traversées par une première ou une seconde branche axiale de résonateur dans leur direction longitudinale et qui englobent respectivement deux surfaces de guide d'ondes optique agencées à une certaine distance entre elles, et au moins un élément de réflexion couplant entre elles les branches de guide d'ondes avec une surface de réflexion,
caractérisé en ce que les deux branches de guide d'ondes (12, 14) sont couplées sur une première extrémité (18, 20) par une surface de réflexion unique (50, 73) avec respectivement une réflexion de rayon simple, en ce que les deux branches d'axe de résonateur (52, 54) se coupent en leur point de rencontre (62) sur la première surface de réflexion (50, 73) et en ce que les deux branches de guide d'ondes (12, 14) se recourbent l'une vers l'autre.

2. Laser à guide d'ondes selon la revendication 1, caractérisé en ce que les deux branches d'axe de résonateur (52, 54) incluent en leur point de rencontre (62) sur la surface de réflexion (50, 73) un angle entre environ 45° et environ 90° entre eux.

3. Laser à guide d'ondes selon la revendication 1 ou 2, caractérisé en ce que par rapport aux branches de guide d'ondes (12, 14), la première surface de réflexion (50, 73) est agencée de manière à produire une réflexion complète d'une radiation menée par une branche de guide d'ondes (12, 14) dans l'autre branche de guide d'ondes (14, 12).

4. Laser à guide d'ondes selon l'une des revendications précédentes, caractérisé en ce que les deux premières extrémités (18, 20) des branches de guide d'ondes (12, 14) s'étendent par leurs surfaces de guide d'ondes détournées l'une de l'autre (34, 44) sensiblement jusqu'à la surface de réflexion (50, 73).

5. Laser à guide d'ondes selon l'une des revendications précédentes, caractérisé en ce que les branches de guide d'ondes (12, 14) s'étendent en ligne droite au niveau de leurs premières extrémités (18, 20).

6. Laser à guide d'ondes selon l'une des revendications précédentes, caractérisé en ce que sur leurs deuxièmes extrémités (22, 24) détournées du premier élément de réflexion (16, 72), les branches de guide d'ondes (12, 14) sont respectivement munies d'un miroir de résonateur (26, 28).

7. Laser à guide d'ondes selon la revendication 6, caractérisé en ce que les miroirs de résonateur (26, 28) disposés sur les deuxièmes extrémités (22, 24) des branches de guide d'ondes (12, 14) représentent les miroirs d'extrémité du résonateur.

8. Laser à guide d'ondes selon l'une des revendications précédentes, caractérisé en ce que les surfaces de réflexion (50, 73) s'étendent dans un plan (66) qui se situe parallèlement à un axe de courbure du miroir de résonateur (26, 28).

9. Laser à guide d'ondes selon l'une des revendications précédentes, caractérisé en ce que les branches de guide d'ondes (12, 14) sont accouplées entre elles sur une deuxième extrémité (22, 24) opposée à la première extrémité (18, 20).

10. Laser à guide d'ondes selon la revendication 9, caractérisé en ce que le couplage sur la deuxième extrémité (22, 24) s'effectue par un deuxième élément de réflexion (74).

11. Laser à guide d'ondes selon la revendication 9 ou 10, caractérisé en ce que les branches de guide d'ondes (12, 14) accouplées à la première et à la deuxième extrémité (18, 20, 22, 24) donnent une configuration de radiation annulaire.

12. Laser à guide d'ondes selon la revendication 10 ou 11, caractérisé en ce que les deux branches de guide d'ondes (12, 14) sont accouplées sur la deuxième extrémité (22, 24) par une deuxième surface de réflexion unique (75) avec respectivement une réflexion de rayonnement simple sur celle-ci.

13. Laser à guide d'ondes selon la revendication 12, caractérisé en ce que les deux branches d'axe de résonateur (52, 54) se coupent en leur point de rencontre respectif sur la deuxième surface de réflexion (75).

14. Laser à guide d'ondes selon l'une des revendications précédentes, caractérisé en ce que la première surface de réflexion (73) est la surface spéculaire d'un miroir de résonateur (72).

15. Laser à guide d'ondes selon l'une des revendications 9 ou 14, caractérisé en ce que la deuxième surface de réflexion (75) est la surface spéculaire d'un miroir de résonateur (74).

16. Laser à guide d'ondes selon la revendication 14 ou 15, caractérisé en ce que la première et la deuxième surface de réflexion (73, 75) sont formées par les deux miroirs d'extrémité (72, 74) du résonateur.

17. Laser à guide d'ondes selon la revendication 16, caractérisé en ce qu'un découplage se produit dans l'un des deux miroirs d'extrémité (74).

18. Laser à guide d'ondes selon la revendication 17, caractérisé en ce que le miroir d'extrémité (74) fait sortir deux rayons laser (76, 78) incluant entre eux l'angle des branches d'axe de résonateur (52, 54) sur le point d'intersection.

19. Laser à guide d'ondes selon la revendication 18, caractérisé en ce que l'un des rayons laser de sortie (78) peut être réfléchi en retour par un miroir de réflexion (80).

20. Laser à guide d'ondes selon l'une des revendications précédentes, caractérisé en ce que le résonateur est un résonateur à foyer commun.

21. Laser à guide d'ondes selon l'une des revendications précédentes, caractérisé en ce que les miroirs de résonateur (26, 28, 72, 74) présentent des surfaces spéculaires cylindriques (56, 58, 73, 75).

22. Laser à guide d'ondes selon l'une des revendications précédentes, caractérisé en ce que le résonateur s'étend sur un côté de l'axe de résonateur (52, 54) en tant que moitié d'un résonateur instable symétrique par rapport à l'axe de résonateur (52, 54).
